# EUROPEAN PATENT SPECIFICATION

(11) **EP 4 547 561 B1**
(45) Date of publication and mention of the grant of the patent: **18.11.2026**
(21) Application number: 23735316.4
(22) Date of filing: 27.06.2023
(51) Int. Cl.: B64G 1/50, B64G 1/10, B64G 1/24, B64G 1/58

(54) **SATELLITE THERMAL CONTROL**
THERMISCHE STEUERUNG FÜR SATELLITEN
COMMANDE THERMIQUE PAR SATELLITE

(30) Priority: 30.06.2022 GB 202209606
(43) Date of publication of application: 07.05.2025
(73) Proprietor: Iceye Oy, 02150 Espoo (FI)
(72) Inventor: POIROT, Patrick, 02150 Espoo (FI); SMITH, Charles, 02150 Espoo (FI); KOWALUK, Marek, 02150 Espoo (FI)
(74) Representative: Crowell & Moring U.K. LLP
(86) International application number: PCT/EP2023/067398
(87) International publication number: WO 2024/003013

(56) References cited:
- WO-A1-2016/161275
- US-A- 5 794 891
- US-A- 6 073 888
- US-A1- 2009 009 391
- US-A1- 2017 101 197

## Description

The present application relates to spacecraft, and in particular to satellite thermal control.

### Background

In spacecraft design, the function of a thermal control system "TCS" is to keep all the spacecraft's component systems within acceptable temperature ranges during all mission phases. All spacecraft components have a range of allowable temperatures that must be maintained to meet operational requirements. If a component is subject to temperatures which are too high or too low, it could be damaged or its performance could be severely affected.

This is particularly challenging for an orbiting satellite since operating in vacuum: air does not balance via convective thermal fluxes between hot spot and cold areas. The satellite experiences extreme temperatures in space due to wide variations in the external environment from extreme coldness in the shadows of deep space or intense heat in the direct sunlight. Further, an orbiting satellite generates heat depending on the power and efficiency of its components.

Temperatures may be regulated with passive and/or active thermal management technology. Passive thermal control aims to maintain component temperatures without using powered equipment. Such systems are typically associated with low cost, volume and weight. Conventional satellite thermal control systems may use a satellite body panel as radiator for dissipating excess heat via radiative heat transfer. However, body panel size increases as thermal control demands increase, and increased body panel size leads to undesirably large satellites. Deployable radiators for dissipating excess heat via radiative heat transfer on small spacecraft can be challenging due to volumetric constraints.

Active thermal control methods rely on input power for operation and are typically more challenging to integrate into small satellites because of the power, mass and volume needs associated with the technology. Accordingly, the use of actively controlled thermal techniques in small spacecraft is limited. However, these methods are typically more effective in maintaining tighter temperature control for components. Typical active thermal devices that may be used on large-scale spacecraft include electrical resistance heaters, cryocoolers, thermoelectric coolers, and fluid loops. For example, thermostatically controlled resistive electric heaters may be used to keep the equipment temperature above its lower limit during a mission's cold phases.

The limitation of some of the known thermal control techniques is that they are not applicable to small spacecraft due to mass, surface area, volume and/or power constraints. A need exist for thermal management systems and methods applicable to small spacecraft.

Some embodiments of the invention described below solve some of these problems. However, the invention is not limited to solutions to these problems and some embodiments of the invention solve other problems.
WO 2016/161275 A1 describes a method for thermally stabilizing a communication satellite in orbit around the Earth relies on the discrete rotational symmetry of the pattern of antenna beams of the satellite. Exploiting the symmetry, the orientation of the satellite is changed from time to time by rotating the satellite through a symmetry angle of the rotational symmetry. Because of the symmetry, the beam pattern is unchanged after the rotation; but, because the rotation angle is less than 360°, a different side of the satellite is exposed to sunlight. The use of different thermal radiators and thermal shields on different sides of the satellite means that the thermal budget of the satellite is different after the rotation. By judiciously applying rotations as needed, as the orbit's orientation relative to the Sun evolves in time, it is possible to achieve effective control on the thermal budget of the satellite.

US 5794891 A describes an attitude of a satellite placed on a non-heliosynchronous earth orbit in a plane that is inclined relative to the equatorial plane of the earth is controlled for efficient use of solar panels and radiators. The satellite has a structure, solar panels apt to be rotated with respect to the structure rotation and two opposed radiators each fixed on one of two opposed faces of the satellite structure which are orthogonal to the rotation axis. One of the radiators has greater emissivity than the other. A yaw axis bound to the structure satellite and orthogonal to rotation axis is aimed towards the earth. The solar panels of the satellite are maintained in an optimum orientation relative to the sun by rotating them. At least during periods of each year when an angle beta between a sun-earth direction and the plane of the satellite orbit lies between two predetermined values, the satellite structure is rotated about the yaw axis to maintain the radiators in a plane parallel to a direction toward the sun so long as the satellite is remote from an orthogonal projection of the sun direction onto the satellite orbit plane. The orientation of the satellite structure is reversed when necessary to ensure that the radiator of higher emissivity is in shadow.

US 6073888 A describes a thermal radiative system for an earth orbiting satellite including a plurality of faces intermittently exposed to maximum solar illumination comprises a thermal radiator is mounted on a face for discharging heat from a thermal load to deep space. A heat conductor extends between the thermal load and the thermal radiator. Thermal switches are operable for connecting the thermal load to the thermal radiator for cooling when the temperature of the thermal load is above a predetermined level and for disconnecting the thermal load from the thermal radiator when the temperature of the thermal load falls below the predetermined level. A shield including phase change management (PCM) material is thermally connected to the thermal load for drawing heat away therefrom. In another embodiment, first and second thermal radiators are mounted on first and second faces, respectively, of the satellite for discharging heat from the thermal load and the thermal load is sequentially connected to the first and second thermal radiators to achieve optimum discharge of heat from the thermal load. To this end, the thermal load is thermally connected to the first radiator so long as the first radiator is exothermic and thermally disconnected from the first radiator when the first radiator becomes endothermic and is thermally connected to the second radiator so long as the second radiator is exothermic and thermally disconnected from the second radiator when the second radiator becomes endothermic.

US 2017/101197 A1 describes a twist capsule rotary joint system for passing a fluid through a pressure hull without a dynamic seal. A rotating cylindrical drum positioned outboard of the pressure hull is adapted to be driven in a reciprocating manner through an angle and backward through the same angle. At least one outboard pressure line or hose has a first end attached to a fixed connector that extends through the pressure hull near and radially outward of the rotating cylindrical drum. A second end of the outboard pressure line or hose is attached to a connector that extends through the top outboard surface of the drum. As the drum rotates, the pressure line wraps around the drum, or unwraps from the drum. In an exemplary embodiment, two pressure lines carry two-phase coolant through the pressure hull of a spacecraft in support of a rotating radiator that is adapted to rotate to present a minimum surface area toward the sun.

US 2009/009391 A1 describes a system for a satellite that includes a core system and multiple nodes for generating an active phased array. Each node includes a transceiver for wirelessly receiving a transmit signal from the core system, for wirelessly transmitting the transmit signals to a target, for wirelessly receiving the receive signals from the target, and for wirelessly transmitting the receive signal back to the core system. The system also includes a subsystem for inhibiting signal interference between the transmit and receive signals. Each of the nodes may also include local power generation circuitry.

### Summary

This Summary is provided to introduce a selection of concepts in a simplified form that are further described below in the Detailed Description. This Summary is not intended to identify key features or essential features of the claimed subject matter, nor is it intended to be used to determine the scope of the claimed subject matter.

The invention provides a synthetic aperture radar "SAR" satellite and a method of controlling thermal radiation heat transfer of such a satellite.

In a first aspect, the present disclosure provides a synthetic aperture radar 'SAR' satellite comprising: a satellite body including at least one radiative surface configured to emit satellite heat to space; a SAR antenna attached to the satellite body; and an attitude determination and control 'ADCS' system for controlling an orientation of the satellite travelling in orbit around Earth, wherein the ADCS system is configured to change the orientation of the satellite with respect to the sun between a first position in which the radiative surface points away from the sun and a second position in which the radiative surface is exposed to the sun, wherein the SAR antenna faces towards Earth in the first and second position; wherein the ADCS system is configured to between imaging tasks: change the orientation of the satellite by rotating the satellite around an axis of rotation (Z), wherein a vector normal to the radiative surface extends away from the satellite body in a first direction (Y) substantially perpendicular to the axis of rotation (Z); and maintain the satellite in the second position to control a satellite temperature by absorption of incident heat from solar radiation received via the radiative surface.

In some embodiments, in the second position, an angle between the first direction and solar radiation incident on the radiative surface is 90° or less, optionally less than 60°, optionally less than 30°, optionally less than 10°.

In some embodiments, the satellite further comprises one or more temperature sensor(s) for determining a satellite temperature and/or a temperature of one or more components of the satellite, wherein the ADCS system is configured to change the orientation of the satellite in response to a signal from the one or more temperature sensor(s).

In some embodiments, the ADCS system is configured to maintain the satellite in the second position for at least 5 minutes, optionally at least 10 minutes, optionally at least 15 minutes.

In some embodiments, the ADCS system is configured to maintain the satellite in the second position until a temperature set point has been reached.

In some embodiments, the ADCS system is configured to maintain the satellite in the first position to control the satellite temperature by emission of satellite heat to space via the radiative surface.

In some embodiments, the radiative surface has a solar absorptivity between 10% and 60%, optionally between 20% and 50%, optionally between 30% and 40%.

In some embodiments, the radiative surface provides an infrared 'IR' emissivity of at least 0.85, optionally at least 0.9 and a solar absorptivity of at least 0.3, optionally at least 0.35.

In some embodiments, the radiative surface covers an area of at least 0.05 m², optionally at least 0.1 m², optionally at least 0.15 m².

In some embodiments, the radiative surface comprises part of a radiator panel forming part of an existing structure of the satellite body.

In some embodiments, the radiative surface comprises an adhesive tape comprising a polyvinyl fluoride film.

In some embodiments, the satellite further comprises one or more solar panel(s) attached to the satellite body, wherein a surface normal to a solar surface of the solar panel(s) extends away from the satellite body in a direction substantially opposite to the first direction.

In some embodiments, the ADCS system is configured to control the orientation of the satellite to alternate between the first and second position to selectively provide for heating and cooling of the satellite.

In some embodiments, the satellite is a microsatellite, or a small satellite.

In some embodiments, the satellite is an imaging satellite for Earth observation.

In a second aspect, the present disclosure provides a method of controlling thermal radiation heat transfer of a synthetic aperture radar 'SAR' satellite, optionally the satellite according to the first aspect, wherein the satellite comprises a satellite body including at least one radiative surface configured to emit satellite heat to space, a SAR antenna attached to the satellite body, and an attitude determination and control 'ADCS' system for controlling an orientation of the satellite travelling in orbit around Earth, wherein the method performed by the ADCS system comprises: changing the orientation of the satellite with respect to the sun between a first position in which the radiative surface points away from the sun and a second position in which the radiative surface is exposed to the sun, wherein the SAR antenna faces towards Earth in the first and second position; wherein changing the orientation of the satellite includes rotating the satellite around an axis of rotation (Z), wherein a vector normal to the radiative surface extends away from the satellite body in a first direction (Y) substantially perpendicular to the axis of rotation (Z); wherein the method is performed between imaging tasks.

In some embodiments, the method replaces a redundant line of a thermal control system.

In some embodiments, the method is performed at a predetermined position in the orbit, a predetermined point in time and/or in response to a measured temperature.

Embodiments of the invention also provide a computer readable medium comprising instructions, for example in the form of an algorithm, which, when implemented in a computing system forming part of a satellite operation system, cause the system to perform any of the methods described therein.

The preferred features may be combined as appropriate, as would be apparent to a skilled person, and may be combined with any of the aspects of the invention. The satellite according to the first aspect can be developed with features that are described in the context of the method of controlling thermal radiation heat transfer according to the second aspect. The method according to the second aspect can be developed further with the features described in the context of the satellite according to the first aspect.

### Brief Description of the Drawings

Embodiments of the invention will be described, by way of example, with reference to the following drawings, in which:
Figures 1 is a schematic perspective view of a satellite in orbit above Earth;
Figures 2 to 11 show a series of stills of the satellite shown in Figure 1 at different points in time, wherein the satellite is controlled to provide thermal radiation heat transfer;
Figure 12 shows is a partial perspective view of a satellite including an ADCS unit for controlling the satellite travelling in orbit around Earth;
Figure 13 shows photos of a first sample (Figure 13a and 13b) and a second sample (Figure 13c and 13d) of a radiative surface for which absorptivity and emissivity have been measured as shown in Table 1;
Figure 14 shows an embodiment of a radiative panel including a radiative surface of the satellite according to Figures 1 to 11;
Figure 15 shows a plot illustrating a temperature profile of a radiative surface; and
Figure 16 shows a plot illustrating a temperature profile of a few components inside the satellite body.

Common reference numerals are used throughout the figures to indicate similar features.

### Detailed Description

Embodiments of the present invention are described below by way of example only. These examples represent the best mode of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

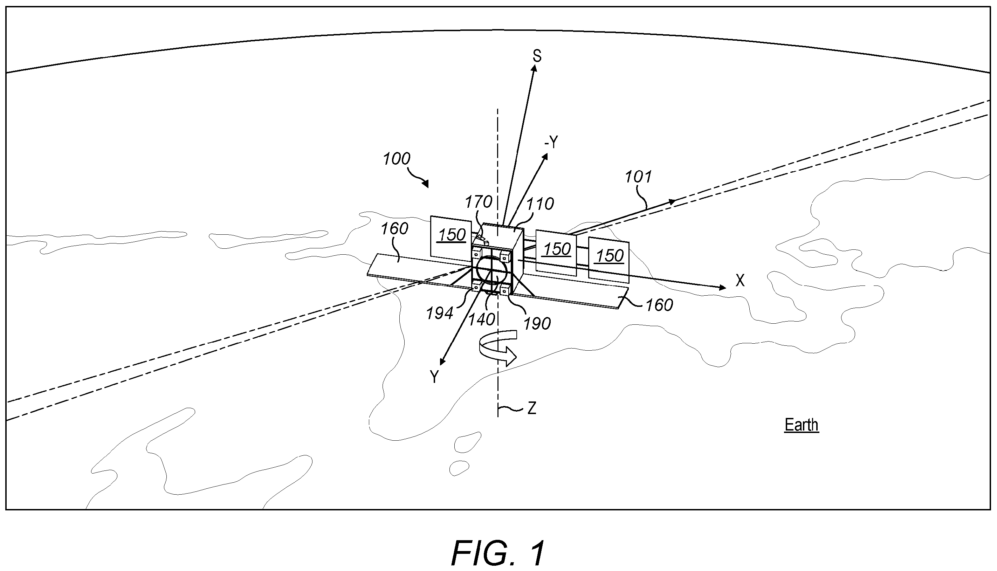

Figure 1 is a perspective view of a satellite 100 in orbit around Earth. The satellite 100 travels along a direction of travel 101. The satellite 100 shown in Figure 1 is a micro satellite for Earth observation. However, the present disclosure is equally applicable to other spacecraft, such as small satellites or larger spacecraft. In the following description, for the sake of simplicity, reference is made to a satellite.

In some embodiments, the satellite may be travelling in, or configured to travel in a low Earth orbit. In some embodiments, the satellite 100 may be controlled by a ground segment (not shown in Figure 1) comprising all the ground-based elements of the spacecraft system. In some embodiments, there is a ground station and/or computing system configured to control the satellite travelling in orbit around Earth and/or to implement some of the operations described here.

As shown in Figure 1, the satellite 100 comprises a satellite body 110, one or more solar panels 150 and "wings" 160. One or more SAR antennas may be mounted on the satellite wings 160. The satellite additionally comprises a propulsion system 190 shown to be mounted on the satellite body 110 on the surface opposite the solar panels 150. The propulsion system 190 can comprise thrusters, such as four thrusters, one of which is indicated at 194 in Figure 1, which are part of the system for operating and manoeuvring the satellite to position it appropriately for capturing SAR imagery of the Earth. A computing system may be housed in the satellite body which may be configured to implement some of the operations described herein.

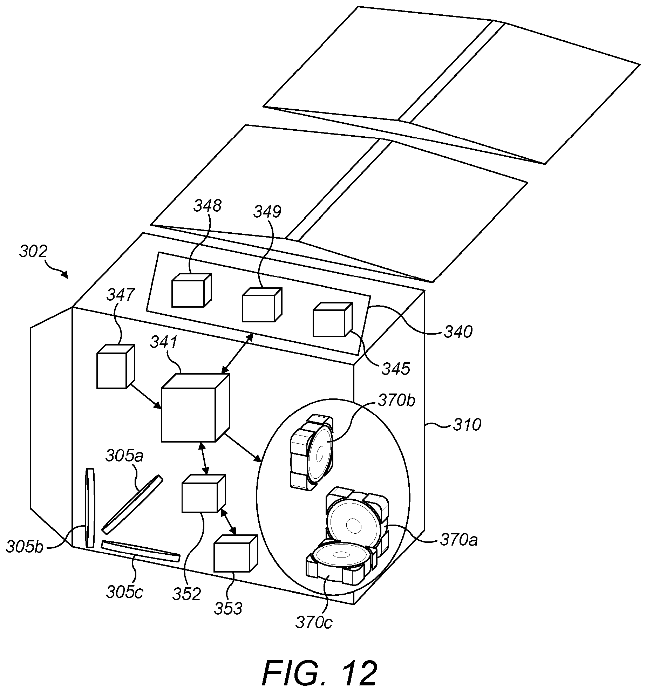

The satellite 100 further comprises an attitude determination and control system "ADCS" unit. The ADCS unit (not shown) is usually located in the satellite body 110. The ADCS unit is used to control the satellite travelling in orbit that is to bring the satellite 100 in a desired orientation and to maintain it. The ADCS unit is further described with reference to Figure 12. The ADCS unit may be provided with one or more reaction wheels (not shown). The reaction wheel may exert force of torque on the satellite body 110. Additionally or alternatively, the ADCS unit may comprise a plurality of torque rods. The torque rods are generally operated to maintain the satellite 100 in a particular attitude, wherein the operation is controlled by an ADCS controller.

In some embodiments, the satellite 100 includes one or more optical device(s) for measuring the positions of stars using photocells or a camera, such as a star tracker 170 and/or a sun sensor. The star tracker 170 may be mounted on an upper surface of the satellite body 110. The star tracker 170 may be used to determine the orientation of the satellite with respect to the sun. Star trackers normally look into the sky and compare what they see with a built-in catalogue of the sky to determine their orientation with respect to the sun. Two star trackers 170 are used in the embodiment shown in Figure 1 so that if one of them is blinded by the sun, the other is not. The satellite 100 may also comprise one or more sun sensors (not shown) as a navigational instrument used to detect the position of the sun. Based on the one or more star trackers and/or one or more sun sensors, the satellite can determine the orientation of the satellite with respect to the sun. This information is provided to the ADCS system for controlling the orientation of the satellite 100 to change between the first and second position, as is explained further below.

As shown in Figure 1, the satellite 100 comprises a radiative surface 140. The radiative surface 140 may be a dedicated surface for dissipating excess heat via radiative heat transfer, sometimes referred to as a radiator. The radiative surface 140 is configured to emit satellite heat to space. This is typically done by emitting infrared "IR" radiation from the surface. The radiative surface 140 shown in Figure 1 is mainly circular in shape. However, in alternative examples, the radiator surface 140 may be in a different form, such as mainly rectangular in shape. The radiative surface may cover an area of at least 0.05 m², at least 0.1 m², or at least 0.15 m². The round radiative surface 140 shown in Figure 1 covers an area of approx. 0.2 m² and has a diameter of approx. 0.5 m. Depending on internal temperatures and dissipations, the radiative surface may emit a heating power between 280 W/m² and 480 W/m².

The invention is based on the finding that a satellite's radiator or radiative surface can also be used to absorb incident heat from solar radiation. By adjusting an orientation of the satellite with respect to the sun, the radiator or radiative surface may then be controlled to provide for both heat absorption or heat emission, respectively. To provide for active thermal control, the satellite's ADCS system may be used to change the orientation of the satellite between a first position in which the radiative surface points away from the sun and a second position in which the radiative surface is exposed to the sun. This reduces costs, integration time and number of parts of the satellite, as the ADCS system is integrated in the satellite and no additional components are required to control thermal behaviour. This is particularly advantageous for small spacecraft due to strict mass and volume constraints. For example, if the power requirements are reduced through the use of the ADCS system to control thermal behaviour, this may allow the design of satellite's with smaller solar panels. Additionally or alternatively, the satellite may be designed with one instead of two redundant electrical heating system. Using electricity to reorient the satellite to take advantage of the heat from the sun is less energy-intensive than powering an electric heater.

In some embodiments, the radiative surface 140 and the solar panels 150 are positioned at opposite sides of the satellite body 110. A surface normal to the radiative surface 140 may extend away from the satellite body in a first direction Y. A surface normal to the solar panels 150 may extend away from the satellite body in a direction substantially opposite to the first direction Y. This direction is indicated as -Y in Figure 1.

During normal operation of the satellite, the solar panels may be continuously oriented toward the sun, whenever possible. Accordingly, the position of the satellite 100 may be controlled such that the solar panels 150 face the sun, as shown in Figure 1. The direction of the sun is indicted by the arrow labelled "S" in Figure 1, which may also be referred to as the sun vector. It is well known in the art that a solar panel may capture more energy if it is facing directly at the sun. An exception may be given when the satellite is oriented such that it can perform its intended function, such as imaging of the Earth using synthetic aperture radar 'SAR' or other imaging methods. For imaging, the length of a SAR antenna would need to be aligned along the travel direction 101. However, during normal operation of the satellite 100 shown in Figure 1, the radiative surface 140 would be continuously oriented away from the sun. Accordingly, the satellite 100 is in a position in which the radiative surface 140 faces deep space. The surrounding space environment acts as a heat sink and the radiative surface 140 may be used to reject excess waste heat created on the satellite.

In the first position of the satellite, the radiative surface points away from the sun. In other words, in the first position, a vector normal to the radiative surface extending in the first direction Y points away from the sun. The satellite 100 shown in Figure 1 is in the first position. The satellite may be in the first position during normal operation. The first position describes a plurality of positions in which the radiative surface is not exposed to the sun. The first position is different from the second position of the satellite, in which the radiative surface is exposed to the sun. In other words, in the second position, the vector normal to the radiative surface points toward the sun. In the second position, the external face of the radiative surface points toward the sun. The second position describes a plurality of positions in which the radiative surface is pointing towards the sun. By changing the orientation of the satellite to the second position in which the radiative surface is exposed to the sun, it is possible to use the radiative surface as a heat source. Changing the orientation of the satellite with respect to the sun may allow implementation of an active thermal control for the satellite via the radiative surface 140.

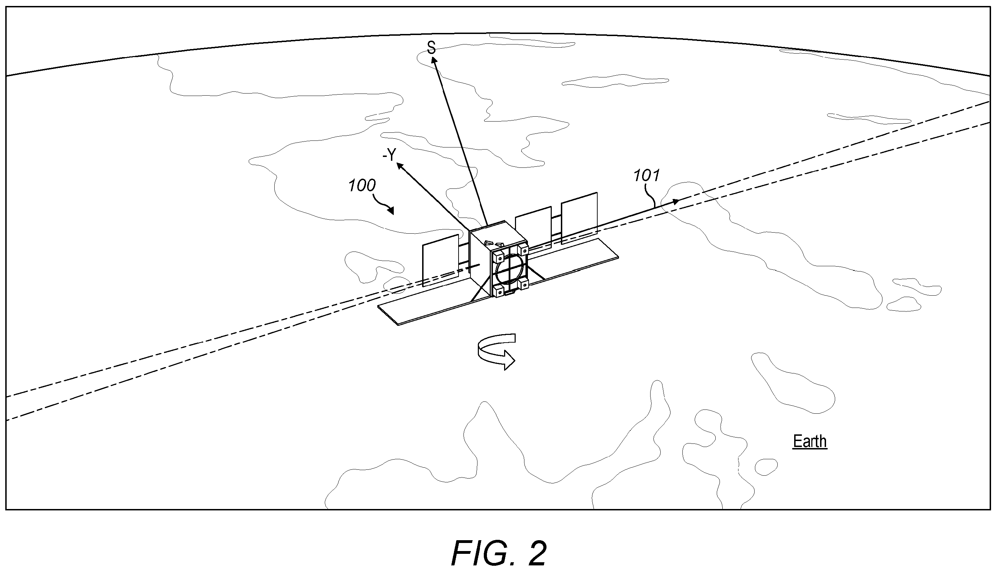

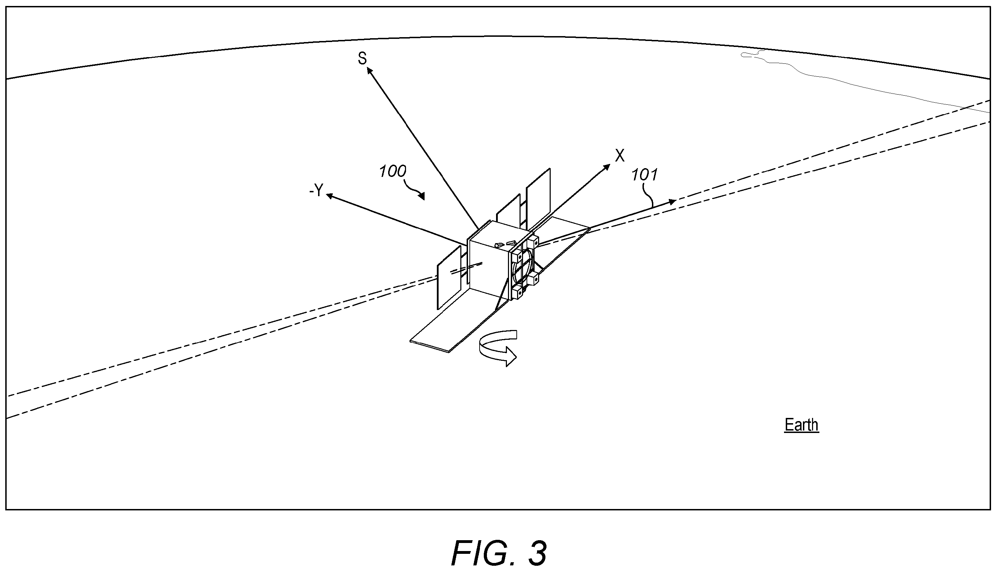

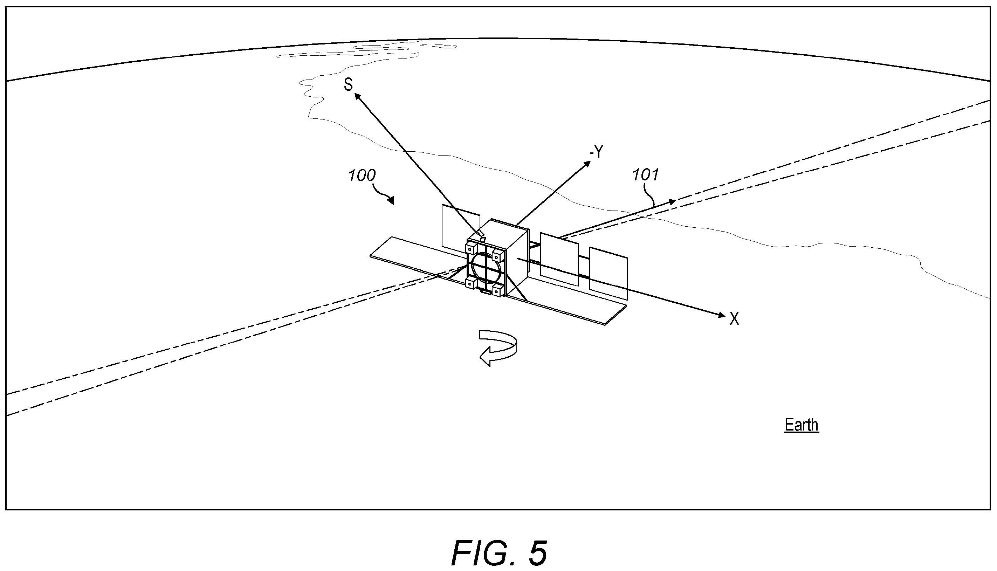

In the following, the sequence of stills shown in Figures 1 to 11 is used to illustrate the control of thermal radiation heat transfer of the satellite. During the whole sequence, the satellite travels with a velocity v along the travel direction 101. Further, the ADCS subsystem is configured to change the orientation of the satellite with respect to the sun. In some embodiments, the ADCS system is configured to rotate the satellite along an axis of rotation Z to change and/or maintain the orientation of the satellite with respect to the sun. The axis of rotation Z may run through the satellite body 110. The axis of rotation Z may extend in a direction substantially perpendicular to the first direction Y. The smaller size and greater agility of micro and small satellites facilitates rotation of the entire satellite to change its orientation with respect to the sun.

In this example shown, rotation around the Z axis is chosen because the payload mounted on the wings 160 is a synthetic SAR antenna, which is itself quite sensitive to temperature, particularly hot temperatures, even when the satellite is not imaging. As such, it is best to keep the SAR antenna pointing generally down towards the Earth, even when not imaging, so it receives infrared heating from the Earth and is not exposed directly to the cold of deep space or the extreme heat of direct sunlight. With other examples of different types of satellites and payloads, which are not claimed, this may not be a constraint and rotation around an axis other than the Z axis could be chosen to rotate the satellite around to change and/or maintain the orientation of the satellite with respect to the sun.

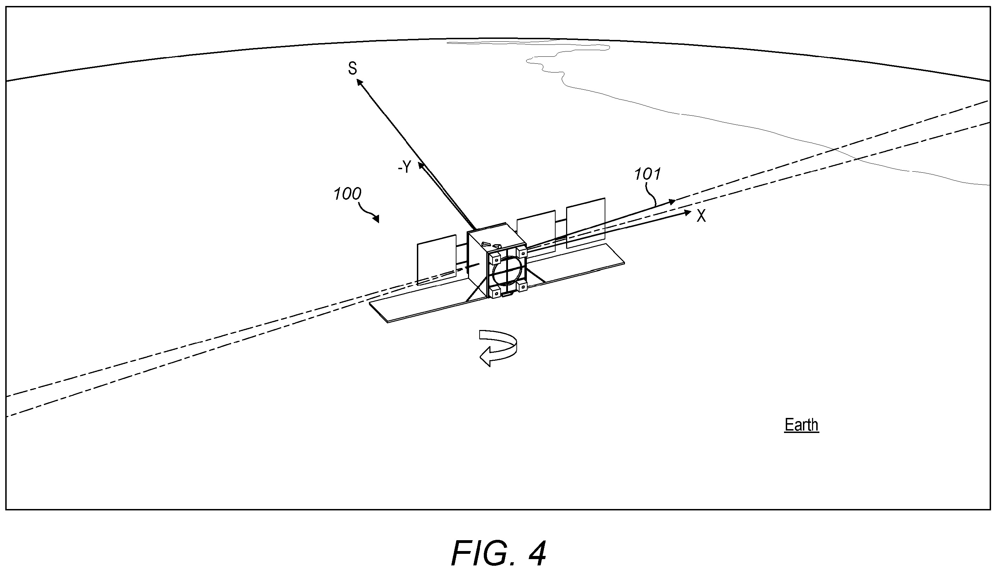

As shown in Figures 1 to 5, the satellite 100 is oriented in the first position in which the radiative surface 140 points away from the sun S. In the first position, the radiative surface 140 can emit satellite heat to space. Initially, the ADCS system rotates the satellite 100 counter clockwise around an axis of rotation Z, as indicated by the arrow in Figures 1 to 3, to allow the solar panel 150 to be continuously oriented towards the sun. In Figure 4, the satellite's rotation around the axis of rotation Z is reversed. In other words, the satellite no longer follows the sun to maximize solar power input received via the solar panels 150. Figure 4 marks the beginning of the so called "sun kick manoeuvre", in which a change of position from the first position to the second position is initiated.

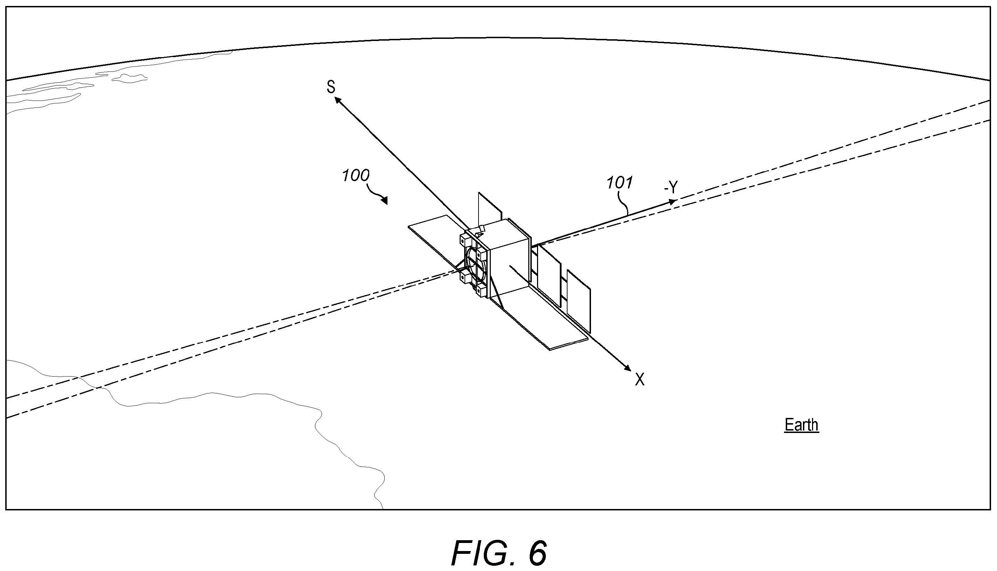

The ADCS system controls the satellite to rotate in a clockwise direction until it reaches the second position in Figure 6, in which the radiative surface 140 is (at least partially) exposed to the sun S. An angle between the first direction Y and the solar radiation incident on the radiative surface 140 is approximately 90°. In the second position, as shown in Figures 6 to 9, the radiative surface absorbs incident heat from solar radiation. The amount of heat that can be absorbed depends on the duration the satellite spends in the second position, the angle between the incident solar radiation and the radiative surface, as well as the size of the radiative surface and its absorptivity properties.

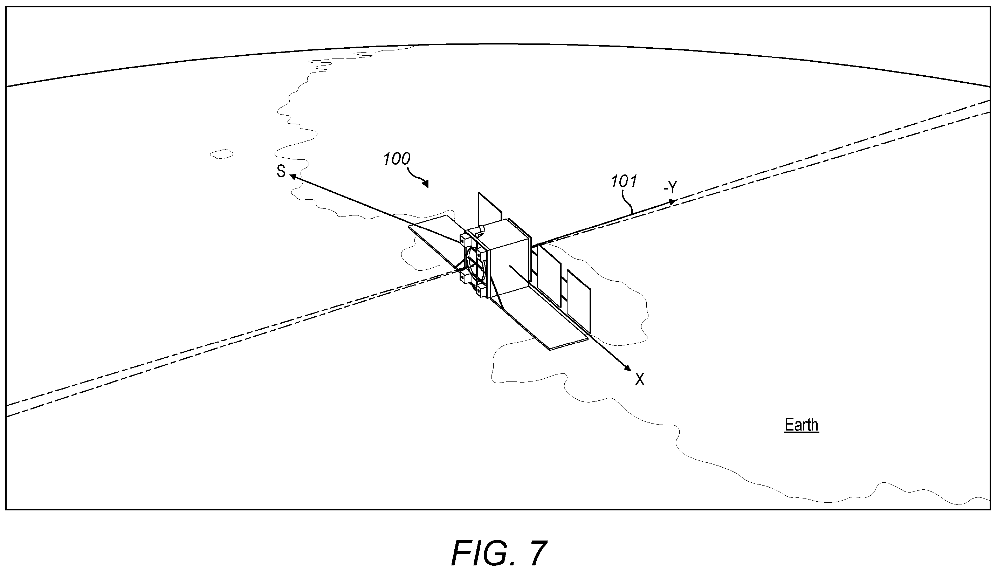

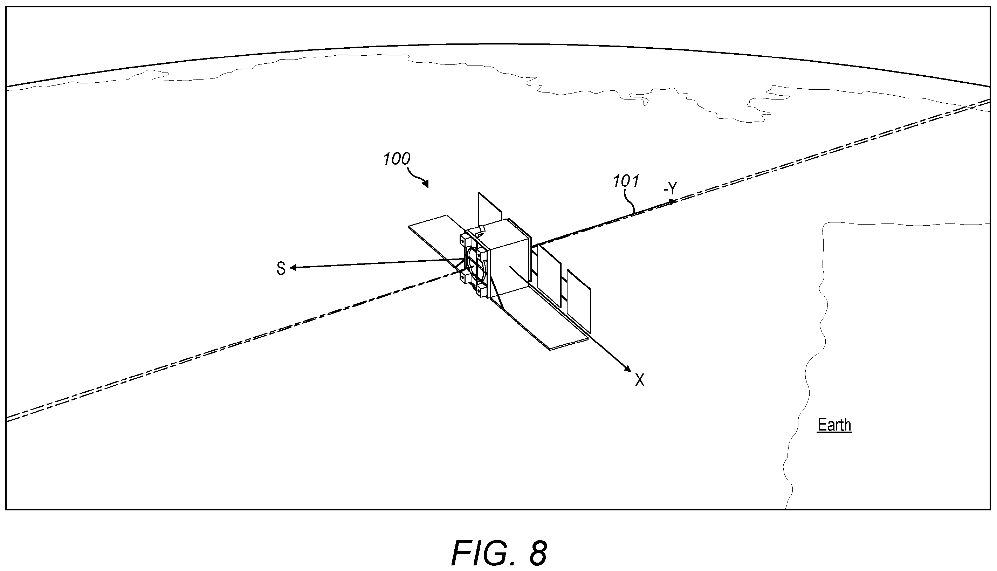

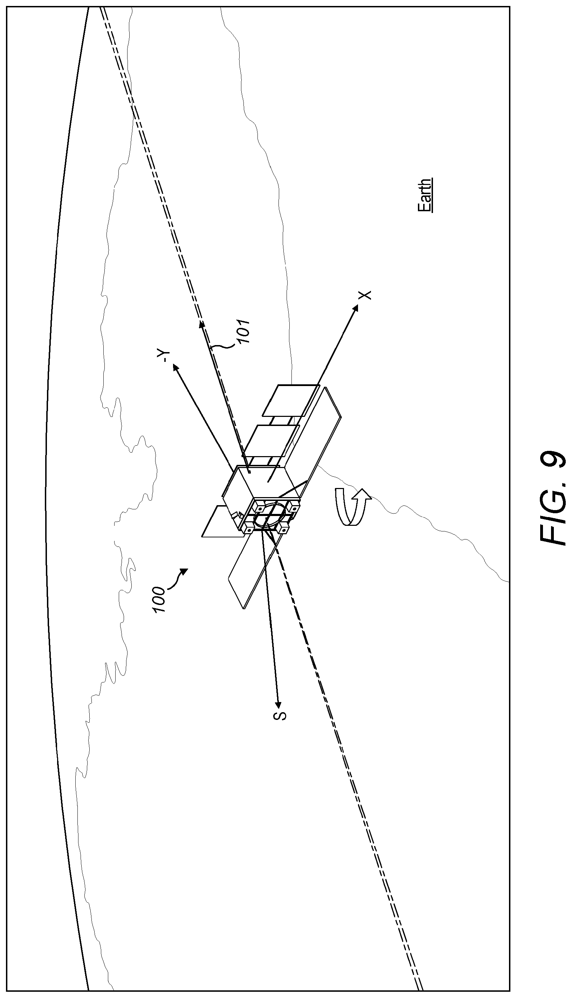

As can be seen in Figures 6 to 8, the orientation of the satellite in the second position is maintained. The orientation of the satellite 100 with respect to the sun changes as the satellite travels along the travel direction 101. In Figure 7, the angle between the first direction Y normal to the radiative surface 140 and the solar radiation incident on the radiative surface is less than 60°. In Figure 8, the angle between the first direction Y and the solar radiation incident on the radiative surface is less than 30°. In Figure 9, the satellite 100 is still in the second position but, is controlled to rotate in a counter clockwise direction to reorient the satellite from the second position back to the first position. According to an example, the satellite is maintained in the second position for a total of at least 5 minutes, optionally at least 10 minutes, optionally at least 15 minutes to increase the satellite's temperature by several degrees °C. The ability of the satellite to control to a certain temperature depends strongly on the time/duration that the satellite is maintained in the second position. By adjusting the duration, which the satellite spends in the second position, the absorbed heat can be controlled with an accuracy down to 1 Watt. Instead of using a fixed duration, it is also possible to use a temperature set point. In one example, the temperature set point is determined by the upper temperature limit of the battery and/or other components of the satellite. For example, if the battery temperature reaches an upper temperature limit, for example 18 °C, the satellite is no longer maintained in the second position. In some embodiments, the satellite can be controlled to remain in the second position until a predetermined satellite temperature has been reached.

Maintaining the satellite in the second position allows control of the satellite's temperature by absorption of incident heat from solar radiation received via the radiative surface. This can be described as a heating phase. The received solar power input received via the radiative surface can be controlled based on a predetermined duration, required power input, or desired temperature. Accordingly, a heating function can be implemented that is actively controlled by the ADCS system. Accordingly, a heating function can be implemented without requiring the use of electricity to directly heat up the satellite. The other side of the radiative surface 140 can also be used to radiate the solar power input received towards internal elements to heat them up. The radiative surface 140 can also conduct heat through connecting members to internal elements to heat them up. In an example, the radiative surface 140 is part of a panel that is made of aluminium, which provides for good thermal conductivity.

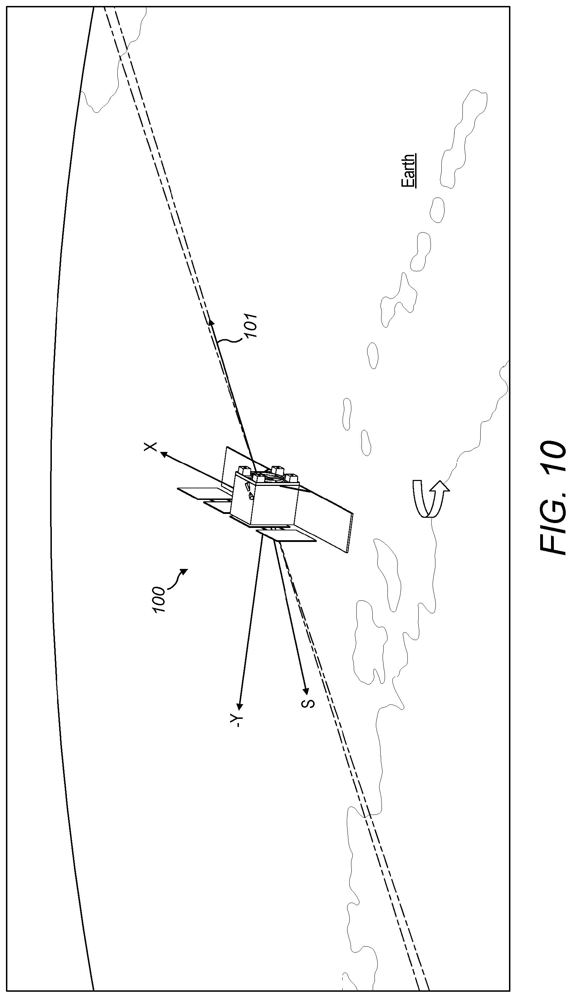

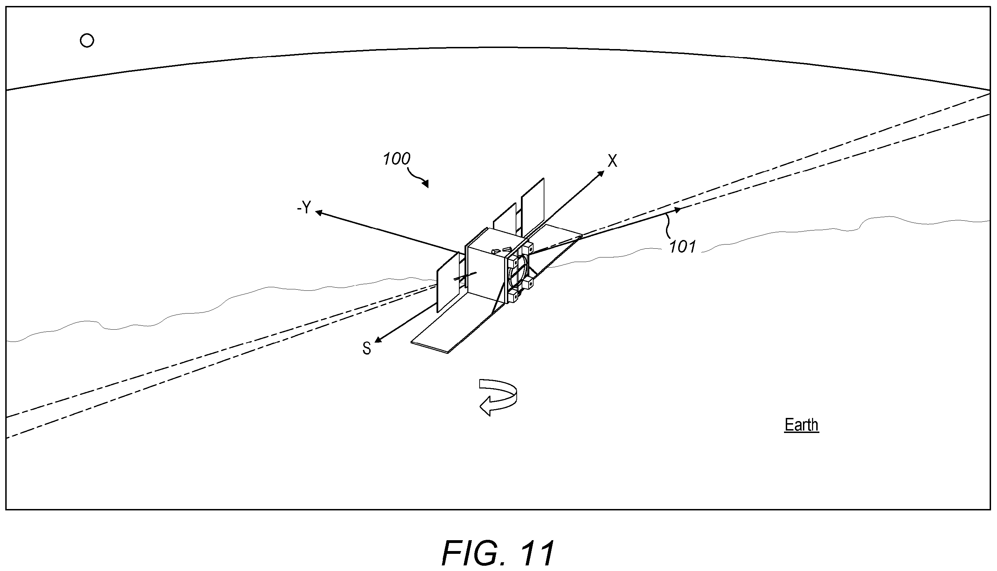

In Figures 10 and 11, the satellite 100 is again oriented in the first position, in which the radiative surface 140 is used to emit heat. This can be described as a cooling phase. Maintaining the satellite in the first position allows to control the satellite temperature by emission of satellite heat to space via the radiative surface. Accordingly, a cooling function can be implemented that is actively controlled by the ADCS system. The cooling phase is typically long, as the solar panels are oriented towards the sun as much as possible to provide power to the spacecraft and to charge the battery.

Based on the above described heating and cooling phases and by adjusting the duration of both phases, a thermal control strategy can be designed that allows the average temperature inside the satellite body to remain in an allowable or preferred temperature range. The strategy depends on the size of the radiative surface needed to cool down the satellite during the worst case scenario, and the duration of the satellite in the second position to keep the minimum temperature above an acceptable level. By alternating the orientation of the satellite between the first and second position it is possible to selectively provide for heating and cooling of the satellite, as needed.

The cooling and heating functions depend on the surface optical properties of the radiative surface, namely solar absorptivity and IR emissivity. Solar absorptivity governs how much incident heating from solar radiation a spacecraft absorbs, while IR emissivity determines how much heat a spacecraft emits to space and how much heat is received from Earth. The surface properties of the radiative surface can be modified by adding, for example, an adhesive tape depending on the particular requirements of the satellite. Other methods such as coating or otherwise modifying the surface of the radiative surface are also possible.

The radiative surface may provide a solar absorptivity between 10% and 60%, optionally between 20% and 50%, optionally between 30% and 40%. In this range, the absorbed incident heat from solar radiation received via the radiative surface is enough to control the satellite temperature but not too much to exceed allowable or preferred temperature ranges for components quickly.

Tape can be added later in the assembly process, is easy to apply and relatively inexpensive. In some embodiments, the surface properties of the radiative surface 140 can be modified by adding an adhesive tape such that the surface is configured to be able to both absorb a high percentage of solar heating and emit a high percentage of spacecraft heat. In some embodiments, an adhesive tape comprising a polyvinyl fluoride (PVF) film is applied to the radiative surface. In some embodiments, Tedlar(R) is used for the PVF film. An example tape including a Tedlar(R) PVF film backing is 3M^{™} Weather Resistant Film Tape 838.

Tedlar^{®} PVF film was first used in film form for aircraft interiors, where it was able to meet stringent toxicity and flammability requirements. It was also used early on as highway noise barriers. Tedlar^{®} PVF film has good chemical resistance as well as weathering resistance. The material was not specifically developed for space applications, nor was it developed with a particular absorptivity and emissivity in mind. The datasheet for 3M^{™} Weather Resistant Film Tape 838 does not list any technical specifications related to absorptivity or emissivity, nor does the datasheet on general properties for Tedlar PVF films. In some examples, the radiative surface, for example comprising Tedlar PVF tape, provides a higher IR emissivity compared to bare aluminium and/or a higher solar absorptivity than bare (polished) aluminium. To this end, the radiative surface may provide an IR emissivity ε of at least 0.85, optionally at least 0.9, and/or a solar absorptivity α of at least 0.3, optionally at least 0.35.

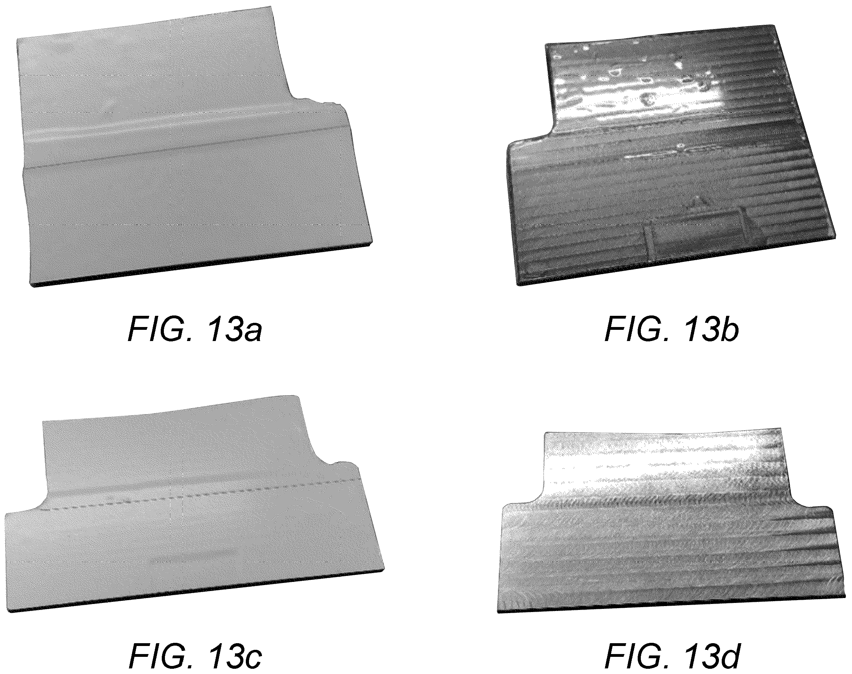

Table 1 shows measured values of absorptivity (α) and emissivity (ε) for two samples, which are shown in Figure 13, based on experiments conducted at a Swiss laboratory. Emissivity and absorptivity have been measured by a dedicated research laboratory using a Perkin Elmer Lambda 900 spectrophotometer equipped with a Spectralon integrating sphere. In the solar wavelength range, the total reflectance is measured between 300 nm and 2500 nm. In the infrared wavelength, the total reflectance is measured between 2.5 µm and 20 µm. Solar reflectance, α, (absorptance or absorptivity) values are calculated from the measurement according to the solar intensity spectrum of ISO 9845 using the solar spectrum for Air Mass Coefficient of 0 outside the atmosphere according to ASTM E 490. The emissivity, ε, (emittance) value is calculated for blackbody radiation at room temperature. The reflectance value for wavelengths longer than 20 micron was extrapolated using a constant value.

Sample 1 has two layers of Tedlar^{®} PVF tape on side 1 (Figure 13a), which is the side facing the outside of the spacecraft, i.e. the radiative surface. Side 2 (Figure 13b) is bare polished aluminium with two layers of polyimide film on it. Side 2 faces the inside of the spacecraft. Sample 2 has one layer of Tedlar^{®} PVF tape on side 1 (Figure 13c) and is bare polished aluminium on side 2 (Figure 13d). As can be seen from the data, the absorptivity with two layers (α = 0.383) and one layer (α = 0.377) of PVF film is higher than with the bare polished aluminium sample alone. At the same time, the emissivity of the surface is increased compared to bare aluminium. The emissivity is in fact an order of magnitude higher with the PVF tape on it.

**Table 1: Absorptivity (α) and Emissivity (ε) of Example Materials**

| **Sample #:** | **Side 1 description:** | **Side 1 results:** | **Side 2 description:** | **Side 2 results:** |
|---|---|---|---|---|
| 1 | Aluminium sample with 2 layers of Tedlar PVF Tape | α = 0.383 | Bare polished Aluminium with 2 layers of polyimide tape | α = 0.509 |
| | | ε = 0.917 | | ε = 0.826 |
| 2 | Aluminium sample with Single layer of Tedlar PVF Tape | α = 0.377 | Bare polished aluminium sample | α = 0.263 |
| | | ε = 0.897 | | ε = 0.037 |

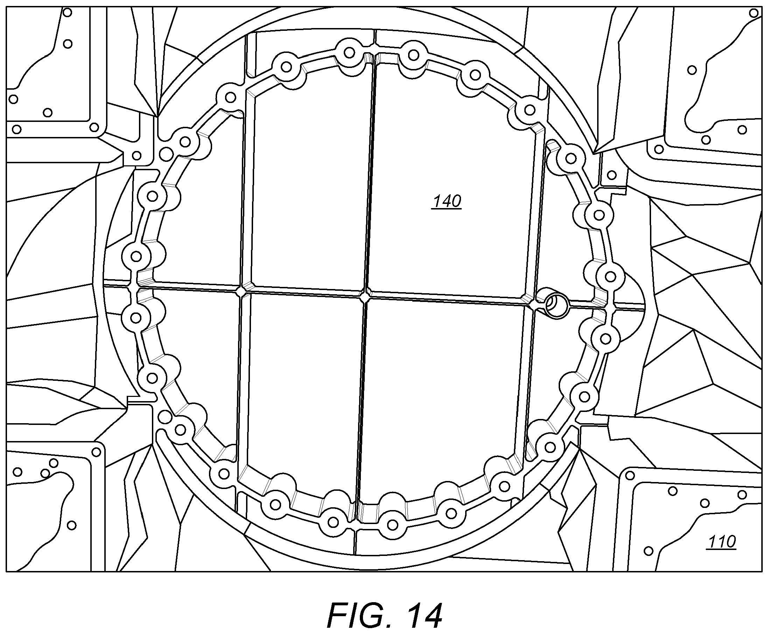

In some embodiments, the radiative surface 140 may be in the form of a structural panel forming part of the existing structure of the satellite body 110, as shown in Figure 14. This configuration corresponds to the embodiment shown in Figures 1 to 11. In this embodiment, the radiative surface 140 has a substantially round shape, and a plurality of mounting holes around its outer circumference. If the radiative surface forms part of the existing structure it can be referred to as a radiative panel. The radiative panel may be an integral part of one side of the satellite. In an example, the radiative panel can even be part of the structure that attaches the satellite to a release mechanism in a rocket as it is being launched into space. The radiative panel can be made of aluminium which has a rather high conductivity. Thus, the temperature is (relatively) uniform on the panel and heat is conducted from one or more component(s) to require cooling to the radiative panel in first position and from the radiative panel to one or more component(s) that require heating in the second position. This is particularly advantageous for small spacecraft due to strict mass constraints. Heat transfers to and from the structure through emission and absorption on the reverse side of the radiative surface as well as through heat conduction through structural members connecting the radiative surface to other parts of the spacecraft.

Figure 12 is a partial perspective view of a satellite, such as the satellite 100 in Figure 1. The ADCS 302 is usually located in a satellite body 310, such as the satellite body 110 in Figure 1, and used to control the orientation of the satellite. The ADCS unit 302 comprises a set of three reaction wheels 370a, 370b, 370c located in the satellite body 310. Reaction wheels are sometimes also known as momentum wheels. The reaction wheels 370a, 370b, 370c can be controlled by the ADCS controller 341. Reaction wheels 370a, 370b, 370c function by using an electric motor to spin a wheel inside the satellite body 310. By conservation of angular moment, spinning the wheel in one direction causes the satellite to rotate in the opposite direction. Using reaction wheels is a well-known way of orienting spacecraft such as satellites. In this example, three reaction wheels 370a, 370b, 370c are provided, one for orienting the satellite in each axis. The reaction wheels 370a, 370b, 370c are shown to have orthogonal axes. In another example, four or more reaction wheels may be used in order to have better control over various aspects of the satellites dynamics, such as slew rate and fine positioning control, particular for satellites with higher moments of inertia.

The ADCS unit shown in Figure 12 further comprises torque rods 305a, 305b, 305c. Torque rods can also be used in satellites to provide attitude control. The torque rods 305a, 305b, 305c are generally operated to maintain the satellite 300 in a particular attitude, wherein the operation is controlled by the ADCS controller 341, which is explained below.

The ADCS unit 302 further comprises an ADCS controller 341. The ADCS controller 341 is in communication with the on-board computing system 340. The on-board computing system 340 comprises a processor 349, a memory 348 and a telemetry unit 345. The memory 348 can be used to store allowable or preferred temperature ranges for components of the satellite and/or temperature set points. The ADCS controller 341 is further configured to receive information from or more sensors 347. The one or more sensors 347 are configured to measure various quantities during the flight of the satellite, such as sun-sensor, star tracker 170, temperature sensors and/or magnetometer for measuring local magnetic field. The ADCS controller 341 is further in communication with a GPS receiver module comprising a GPS receiver 352 and a GPS antenna 353. The ADCS unit 302 is configured to change the orientation of the satellite with respect to the sun between the first position in which the radiative surface points away from the sun and the second position in which the radiative surface is exposed to the sun for controlling thermal radiation heat transfer of the satellite.

In some embodiments, the satellite may be a micro satellite or a small satellite. The smaller size and greater agility of micro and small satellites facilities them to be manoeuvred in their entirety to change their orientation. This kind of manoeuvre may be performed using the ADCS unit. In an example, satellite 100 may be a micro satellite with a mass of 100 kg. Regular satellites having a mass of approximately 1000 kg are generally more expensive and less agile than micro satellites. Satellites may be categorised according to their mass. For example, a satellite having a mass between approximately 1 kg and approximately 10 kg may be categorised as a cube satellite, a satellite having a mass between approximately 50 kg and approximately 250 kg may be categorised as a micro satellite; a satellite having a mass of approximately 500 kg may be categorised as a small satellite; and a satellite having a mass between approximately 800 kg and approximately 1200 kg may be categorised as a regular satellite.

While larger satellites may provide the opportunity to implement active thermal control, such as electrical resistance heaters, cryocoolers, thermoelectric coolers, or fluid loops, on-board the satellites, it may not be feasible to implement such active thermal control on smaller satellites, such as micro satellites (without adding weight or volume).

In some embodiments, the SAR antenna faces towards Earth in the first and second position. In this implementation the satellite rotates around one axis to change the orientation from the satellite between the first and second positions. SAR antennas may have strict temperature requirements and should experience as little thermal cycling as possible. By maintaining the SAR antenna in an orientation in which it faces Earth, the SAR antenna is in optimal orientation for starting imaging and experiences the smallest possible range of temperatures.

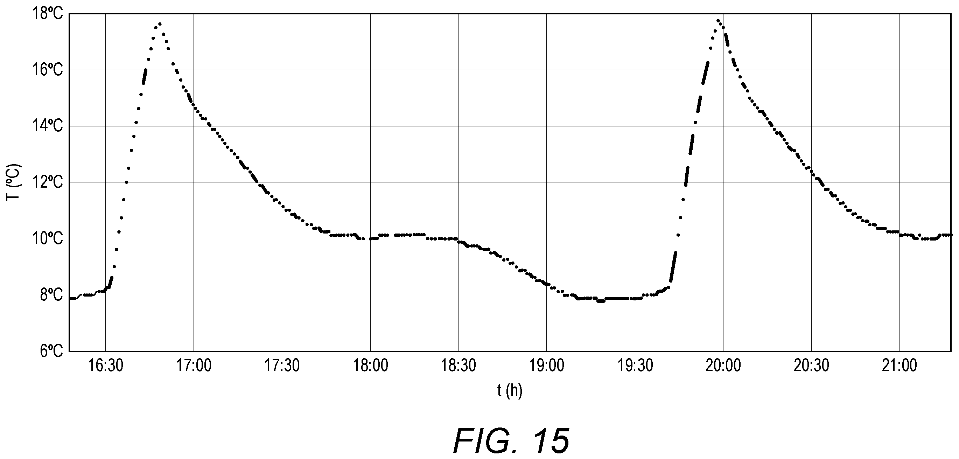

Figure 15 shows a temperature profile of the radiative surface. The temperature profile has been simulated for a radiator panel forming part of the existing structure of the satellite body 110 wherein the radiative surface 140 is made of an adhesive tape comprising a polyvinyl fluoride film. Between approximately 16:30 and 16:45 as well as between approximately 19:45 and 20:00, the orientation of the satellite is changed to the second position in which the radiative surface is exposed to the sun. As can be seen during these time periods, a temperature T of the radiative surface increases almost linearly with time. During these time periods the temperature increases due to the absorption of incident heat from solar radiation received via the radiative surface. These time periods can be described as heating phase. Between the heating periods, the satellite is oriented to be maintained in the first position, in which the satellite temperature decreases due to emission of satellite heat to space via the radiative surface. This time period can be described as a cooling phase. As can be seen in Figure 15, the temperature of the radiative surface remains between 8°C and 18°C over a period of approximately 5 hours. Accordingly, by controlling the orientation of the satellite to alternate between the first and second position, the radiative surface selectively provides for heating and cooling of the satellite. This provides an active thermal control of the satellite that is controlled by the ADCS system.

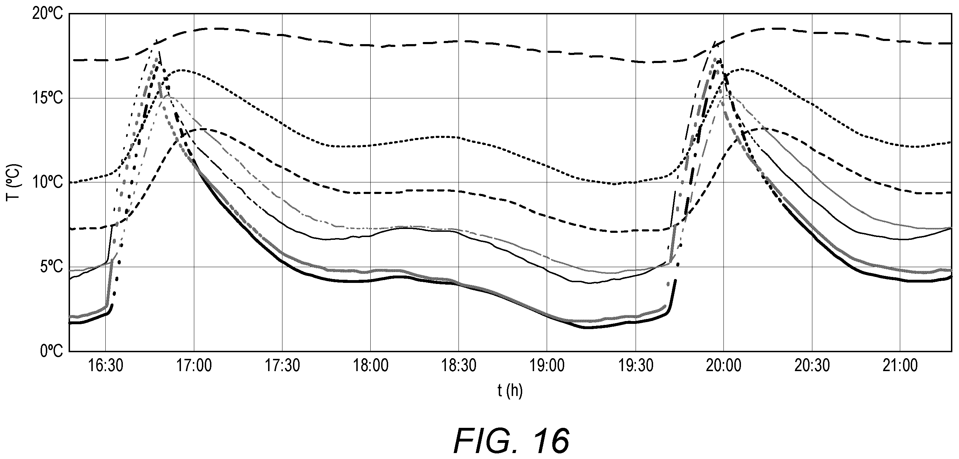

Figure 16 shows a plurality of temperature profiles of different components on-board the satellite. Similarly to Figure 15, the temperature control includes two heating phases of approximately 15 minutes each. As can be seen in Figure 16, the temperature of every component remains between 0°C and 20°C over the simulated time period of approximately 5 hours. Accordingly, the solar power input received via the radiative surface is sufficient to meet temperature requirements of a plurality of instruments on-board the satellite. For example, batteries are components that have relatively narrow temperature limits due to their narrow operating range, typically between 0°C and 20°C. The method of controlling thermal radiation heat transfer can be used to maintain temperature ranges for electronics and batteries in-orbit. By adjusting an incidence angle between the radiative surface and the sun throughout the orbit of the satellite, the exchange of heat can be actively controlled to provide thermal stability for components. By adjusting the duration that the satellite spends in the second position, the absorbed heat can be controlled with an accuracy down to 1 Watt.

The method of controlling thermal radiation heat transfer based on the ADCS unit can provide for the redundant function of a standard thermal control system. Accordingly, the method may replace a redundant line of a thermal control system. Standard thermal control systems do usually comprise two redundant lines of electrical heaters, thermostats and cabling: one being the main line and one redundant. By replacing the redundant line with the method of controlling thermal radiation heat transfer based on the ADCS unit, the number of parts to be integrated into the satellite and thus costs can be reduced. Accordingly, the satellite can be designed with one instead of two redundant electrical heating systems, which may also provide for less power consumption.

For an imaging satellite, the method of controlling thermal radiation heat transfer of the satellite is typically performed when the satellite is not imaging. However, it can be used to complement such tasks. The method of controlling thermal radiation heat transfer can be performed, for example, between imaging tasks to provide for comparable temperature conditions upon start of each imaging task. The method can also be performed during thrust phases to cool down the satellite. During thrusting phase, a power input is generated by the propulsion inside the spacecraft while the attitude of the spacecraft is fixed, which may include solar inputs on the radiative surface (satellite in the second position) that lead to an undesired raise of the satellite's temperature. Between two thrusting phases, the radiative surface is oriented towards space (satellite in the first position) for a predetermined period to evacuate the previously generated heat. The thrust phase duration can thereby be reduced since temperature is not a concern anymore. While not claimed, the method of controlling thermal radiation heat transfer of the satellite can also be implemented for other spacecraft, such as a communication satellite.

Additionally or alternatively, the method may be repeated at a predetermined position in the orbit, at a predetermined time and/or in response to a measured temperature. For example, the satellite can be tasked to change between the first position to the second position during a fixed part of the orbit. The fixed part of the orbit could be during times when the satellite is passing over parts of the Earth where no imaging is desired. The fixed part of the orbit could also be to only change from the first position to the second position when the satellite is not shaded from the sun by the Earth. The method may also be performed based on a measured temperature and a temperature set point for one or more of the components or the radiative surface. Similarly to the embodiment shown in Figures 15 and 16, the satellite may be controlled to remain in the first position until a temperature drops below, for example, 8 °C, and/or to maintain the satellite in the second position until a temperature exceeds, for example, 18 °C. Accordingly, the satellite is maintained in the second position until a (predetermined) temperature set point is reached.

The embodiments described above are fully automatic. In some examples a user or operator of the system may manually instruct some steps of the method to be carried out.

In the described embodiments of the invention the system may be implemented as any form of a computing and/or electronic device. Such a device may comprise one or more processors which may be microprocessors, controllers or any other suitable type of processors for processing computer executable instructions to control the operation of the device in order to gather and record routing information. In some examples, for example where a system on a chip architecture is used, the processors may include one or more fixed function blocks (also referred to as accelerators) which implement a part of the method in hardware (rather than software or firmware). Platform software comprising an operating system or any other suitable platform software may be provided at the computing-based device to enable application software to be executed on the device.

Various functions described herein can be implemented in hardware, software, or any combination thereof. If implemented in software, the functions can be stored on or transmitted over as one or more instructions or code on a computer-readable medium. Computer-readable media may include, for example, computer-readable storage media. Computer-readable storage media may include volatile or non-volatile, removable or non-removable media implemented in any method or technology for storage of information such as computer readable instructions, data structures, program modules or other data. A computer-readable storage media can be any available storage media that can be accessed by a computer. By way of example, and not limitation, such computer-readable storage media may comprise RAM, ROM, EEPROM, flash memory or other memory devices, CD-ROM or other optical disc storage, magnetic disc storage or other magnetic storage devices, or any other medium that can be used to carry or store desired program code in the form of instructions or data structures and that can be accessed by a computer.

Although illustrated as a local device it will be appreciated that the computing device may be located remotely and accessed via a network or other communication link.

It will be understood that the benefits and advantages described above may relate to one embodiment or may relate to several embodiments. The embodiments are not limited to those that solve any or all of the stated problems or those that have any or all of the stated benefits and advantages. Variants should be considered to be included into the scope of the invention as defined by the appended claims.

Any reference to 'an' item refers to one or more of those items. The term 'comprising' is used herein to mean including the method steps or elements identified, but that such steps or elements do not comprise an exclusive list and a method or apparatus may contain additional steps or elements.

As used herein, the terms "component" and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices.

Further, as used herein, the term "exemplary" is intended to mean "serving as an illustration or example of something".

Further, to the extent that the term "includes" is used in either the detailed description or the claims, such term is intended to be inclusive in a manner similar to the term "comprising" as "comprising" is interpreted when employed as a transitional word in a claim.

The figures illustrate exemplary methods. While the methods are shown and described as being a series of acts that are performed in a particular sequence, it is to be understood and appreciated that the methods are not limited by the order of the sequence. For example, some acts can occur in a different order than what is described herein. In addition, an act can occur concurrently with another act. Further, in some instances, not all acts may be required to implement a method described herein.

Moreover, the acts described herein may comprise computer-executable instructions that can be implemented by one or more processors and/or stored on a computer-readable medium or media. The computer-executable instructions can include routines, sub-routines, programs, threads of execution, and/or the like. Still further, results of acts of the methods can be stored in a computer-readable medium, displayed on a display device, and/or the like.

The order of the steps of the methods described herein is exemplary, but the steps may be carried out in any suitable order, or simultaneously where appropriate. Aspects of any of the examples described above may be combined with aspects of any of the other examples described to form further examples without losing the effect sought.

It will be understood that the above description of a preferred embodiment is given by way of example only and that various modifications may be made by those skilled in the art. What has been described above includes examples of one or more embodiments. It is, of course, not possible to describe every conceivable modification and alteration of the above devices or methods for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims.

## Claims

1. A synthetic aperture radar 'SAR' satellite comprising:
a satellite body (110) including at least one radiative surface (140) configured to emit satellite heat to space;
further comprising a SAR antenna attached to the satellite body; and
an attitude determination and control 'ADCS' system for controlling an orientation of the satellite travelling in orbit around Earth, wherein the ADCS system is configured to change the orientation of the satellite with respect to the sun between a first position in which the radiative surface points away from the sun and a second position in which the radiative surface is exposed to the sun, wherein the SAR antenna faces towards Earth in the first and second position;
wherein the ADCS system is configured to, between imaging tasks:
change the orientation of the satellite by rotating the satellite around an axis of rotation (Z), wherein a vector normal to the radiative surface extends away from the satellite body in a first direction (Y) substantially perpendicular to the axis of rotation (Z); and
maintain the satellite in the second position to control a satellite temperature by absorption of incident heat from solar radiation received via the radiative surface.

2. The satellite according to claim 1, wherein, in the second position, an angle between the first direction (Y) and solar radiation incident on the radiative surface is 90° or less, optionally less than 60°, optionally less than 30°, optionally less than 10°.

3. The satellite according to any preceding claim, further comprising one or more temperature sensor(s) for determining a satellite temperature and/or a temperature of one or more components of the satellite, wherein the ADCS system is configured to change the orientation of the satellite in response to a signal from the one or more temperature sensor(s).

4. The satellite according to any preceding claim, wherein the ADCS system is configured to maintain the satellite in the second position:
for at least 5 minutes, optionally at least 10 minutes, optionally at least 15 minutes; or
until a temperature set point has been reached.

5. The satellite according to any preceding claim, wherein the ADCS system is configured to maintain the satellite in the first position to control the satellite temperature by emission of satellite heat to space via the radiative surface.

6. The satellite according to any preceding claim, wherein the radiative surface has a solar absorptivity between 10% and 60%, optionally between 20% and 50%, optionally between 30% and 40%.

7. The satellite according to any preceding claim, wherein the radiative surface provides an infrared 'IR' emissivity of at least 0.85, optionally at least 0.9 and a solar absorptivity of at least 0.3, optionally at least 0.35.

8. The satellite according to any preceding claim, wherein the radiative surface covers an area of at least 0.05 m², optionally at least 0.1 m², optionally at least 0.15 m².

9. The satellite according to any preceding claim, wherein the radiative surface comprises part of a radiator panel forming part of an existing structure of the satellite body, optionally wherein the radiative surface comprises an adhesive tape comprising a polyvinyl fluoride film.

10. The satellite according to any preceding claim, wherein the satellite further comprises one or more solar panel(s) (150) attached to the satellite body, wherein a surface normal to a solar surface of the solar panel(s) extends away from the satellite body in a direction substantially opposite to the first direction (Y), optionally wherein the ADCS system is configured to control the orientation of the satellite to alternate between the first and second position to selectively provide for heating and cooling of the satellite.

11. The satellite according to any preceding claim, wherein the satellite is a microsatellite, or a small satellite, optionally wherein the satellite is an imaging satellite for Earth observation.

12. A method of controlling thermal radiation heat transfer of a synthetic aperture radar "SAR" satellite, optionally the satellite according to any preceding claim, wherein the satellite comprises a satellite body including at least one radiative surface configured to emit satellite heat to space, a SAR antenna attached to the satellite body and an attitude determination and control 'ADCS' system for controlling an orientation of the satellite travelling in orbit around Earth, wherein the method performed by the ADCS system comprises:
changing the orientation of the satellite with respect to the sun between a first position in which the radiative surface points away from the sun and a second position in which the radiative surface is exposed to the sun, wherein the SAR antenna faces towards Earth in the first and second position;
wherein changing the orientation of the satellite includes rotating the satellite around an axis of rotation (Z), wherein a vector normal to the radiative surface extends away from the satellite body in a first direction (Y) substantially perpendicular to the axis of rotation (Z); and
wherein the method is performed between imaging tasks.

13. The method according to claim 12, wherein the method replaces a redundant line of a thermal control system such that the satellite is designed with one instead of two redundant electrical heating systems, optionally wherein the method is performed between imaging missions, optionally wherein the method is performed at a predetermined position in the orbit, a predetermined point in time and/or in response to a measured temperature.

## Patentansprüche

1. Satellit mit Radar mit synthetischer Apertur, SAR, umfassend:
einen Satellitenkörper (110), der mindestens eine Strahlungsfläche (140) einschließt, die so konfiguriert ist, dass sie Satellitenwärme in den Weltraum abstrahlt;
weiter umfassend eine SAR-Antenne, die am Satellitenkörper angebracht ist; und
ein Fluglagebestimmungs- und Steuerungs-, ADCS,-System zum Steuern einer Ausrichtung des in einer Umlaufbahn um die Erde fliegenden Satelliten, wobei das ADCS-System so konfiguriert ist, dass es die Ausrichtung des Satelliten in Bezug auf die Sonne zwischen einer ersten Position, in der die Strahlungsfläche von der Sonne weg zeigt, und einer zweiten Position, in der die Strahlungsfläche der Sonne ausgesetzt ist, ändert, wobei die SAR-Antenne in der ersten und zweiten Position zur Erde zeigt;
wobei das ADCS-System zwischen Bildgebungsaufgaben konfiguriert ist zum:
Ändern der Ausrichtung des Satelliten durch Drehen des Satelliten um eine Drehachse (Z), wobei sich ein Vektor, der senkrecht zur Strahlungsfläche steht, vom Satellitenkörper in einer ersten Richtung (Y) vom Satelliten weg erstreckt, die im Wesentlichen senkrecht zur Drehachse (Z) ist; und
Halten des Satelliten in der zweiten Position, um eine Satellitentemperatur durch Absorption von einfallender Wärme aus über die Strahlungsfläche empfangener Sonnenstrahlung zu regeln.

2. Satellit nach Anspruch 1,
wobei in der zweiten Position ein Winkel zwischen der ersten Richtung (Y) und der auf die Strahlungsfläche einfallenden Sonnenstrahlung 90° oder weniger, optional weniger als 60°, optional weniger als 30°, optional weniger als 10° beträgt.

3. Satellit nach einen vorstehenden Anspruch, weiter umfassend einen oder mehrere Temperatursensoren zum Bestimmen einer Satellitentemperatur und/oder einer Temperatur von einer oder mehreren Komponenten des Satelliten, wobei das ADCS-System so konfiguriert ist, dass es die Ausrichtung des Satelliten als Reaktion auf ein Signal von dem einen oder den mehreren Temperatursensoren ändert.

4. Satellit nach einen vorstehenden Anspruch, wobei das ADCS-System so konfiguriert ist, dass es den Satelliten in der zweiten Position hält:
mindestens 5 Minuten, optional mindestens 10 Minuten, optional mindestens 15 Minuten lang; oder
bis ein Temperatur-Sollwert erreicht wurde.

5. Satellit nach einen vorstehenden Anspruch, wobei das ADCS-System so konfiguriert ist, dass es den Satelliten in der ersten Position hält, um die Satellitentemperatur durch Abstrahlung von Satellitenwärme in den Weltraum über die Strahlungsfläche zu regeln.

6. Satellit nach einen vorstehenden Anspruch, wobei die Strahlungsfläche eine solare Absorptionsfähigkeit zwischen 10 % und 60 %, optional zwischen 20 % und 50 %, optional zwischen 30 % und 40 % aufweist.

7. Satellit nach einen vorstehenden Anspruch, wobei die Strahlungsfläche eine Infrarot-Emissionsfähigkeit von mindestens 0,85, optional mindestens 0,9 und eine solare Absorptionsfähigkeit von mindestens 0,3, optional mindestens 0,35 bereitstellt.

8. Satellit nach einen vorstehenden Anspruch, wobei die Strahlungsfläche eine Fläche von mindestens 0,05², optional mindestens 0,1 m², optional mindestens 0,15 m² abdeckt.

9. Satellit nach einen vorstehenden Anspruch, wobei die Strahlungsfläche einen Teil einer Radiatorplatte umfasst, der Bestandteil einer bestehenden Struktur des Satellitenkörpers bildet, optional wobei die Strahlungsfläche ein Klebeband umfasst, das eine Polyvinylfluoridfolie umfasst.

10. Satellit nach einen vorstehenden Anspruch, wobei der Satellit weiter ein oder mehrere Solarpaneele (150) umfasst, die am Satellitenkörper angebracht sind, wobei sich eine Fläche, die senkrecht zur Sonnenoberfläche des oder der Solarpaneele steht, vom Satellitenkörper weg in einer Richtung erstreckt, die im Wesentlichen zur ersten Richtung (Y) entgegengesetzt ist, wobei das ADCS-System optional so konfiguriert ist, dass es die Ausrichtung des Satelliten so steuert, dass er zwischen der ersten und der zweiten Position abwechselt, um wahlweise Beheizung und Kühlung des Satelliten bereitzustellen.

11. Satellit nach einen vorstehenden Anspruch, wobei es sich bei dem Satelliten um einen Mikrosatelliten oder einen Kleinsatelliten handelt, optional wobei es sich bei dem Satelliten um einen bildgebenden Satelliten zur Erdbeobachtung handelt.

12. Verfahren zum Steuern von Wärmeübertragung durch thermische Strahlung eines Satelliten mit Radar mit synthetischer Apertur, SAR, optional des Satelliten nach einem vorstehenden Anspruch, wobei der Satellit einen Satellitenkörper umfasst, der mindestens eine Strahlungsfläche einschließt, die so konfiguriert ist, dass sie Satellitenwärme in den Weltraum abstrahlt, eine am Satellitenkörper angebrachte SAR-Antenne und ein Fluglagebestimmungs- und Steuerungs-, ADCS,-System zum Steuern einer Ausrichtung des Satelliten, der in seiner Umlaufbahn um die Erde fliegt, wobei das vom ADCS-System durchgeführte Verfahren Folgendes umfasst:
Ändern der Ausrichtung des Satelliten in Bezug auf die Sonne zwischen einer ersten Position, in der die Strahlungsfläche von der Sonne weg zeigt, und einer zweiten Position, in der die Strahlungsfläche der Sonne ausgesetzt ist, wobei die SAR-Antenne in der ersten und zweiten Position zur Erde zeigt;
wobei Ändern der Ausrichtung des Satelliten Drehen des Satelliten um eine Drehachse (Z) einschließt, wobei sich ein Vektor, der senkrecht zur Strahlungsfläche steht, vom Satellitenkörper in einer ersten Richtung (Y) vom Satelliten weg erstreckt, die im Wesentlichen senkrecht zur Drehachse (Z) ist; und
wobei das Verfahren zwischen Bildgebungsaufgaben durchgeführt wird.

13. Verfahren nach Anspruch 12, wobei das Verfahren eine redundante Leitung eines Wärmeregelungssystems ersetzt, sodass der Satellit mit einem statt zwei redundanten elektrischen Heizsystemen konstruiert wird, optional wobei das Verfahren zwischen Bildgebungsmissionen durchgeführt wird, optional wobei das Verfahren an einer vorbestimmten Position in der Umlaufbahn zu einem vorbestimmten Zeitpunkt und/oder als Reaktion auf eine gemessene Temperatur durchgeführt wird.

## Revendications

1. Satellite radar à synthèse d'ouverture « SAR » comprenant :
un corps de satellite (110) incluant au moins une surface radiative (140) configurée pour émettre de la chaleur de satellite dans l'espace ;
comprenant en outre une antenne de SAR fixée au corps de satellite ; et
un système de détermination et de commande d'attitude « ADCS » pour commander une orientation du satellite se déplaçant en orbite autour de la Terre, dans lequel le système d'ADCS est configuré pour modifier l'orientation du satellite par rapport au soleil entre une première position dans laquelle la surface radiative est orientée à l'opposé du soleil, et une seconde position dans laquelle la surface radiative est exposée au soleil, dans lequel l'antenne de SAR est orientée vers la Terre dans la première et la seconde position ;
dans lequel le système d'ADCS est configuré pour, entre des tâches d'imagerie :
modifier l'orientation du satellite en faisant tourner le satellite autour d'un axe de rotation (Z), dans lequel un vecteur normal à la surface radiative s'étend à l'opposé du corps du satellite dans une première direction (Y) sensiblement perpendiculaire à l'axe de rotation (Z) ; et
maintenir le satellite dans la deuxième position pour commander la température de satellite par absorption de la chaleur incidente du rayonnement solaire reçu via la surface radiative.

2. Satellite selon la revendication 1,
dans lequel, dans la seconde position, un angle entre la première direction (Y) et le rayonnement solaire incident sur la surface radiative est 90° ou moins, facultativement inférieur à 60°, facultativement inférieur à 30°, facultativement inférieur à 10°.

3. Satellite selon une quelconque revendication précédente, comprenant en outre un ou plusieurs capteurs de température pour déterminer une température de satellite et/ou une température d'un ou de plusieurs composants du satellite, dans lequel le système d'ADCS est configuré pour modifier l'orientation du satellite en réponse à un signal provenant des un ou plusieurs capteurs de température.

4. Satellite selon une quelconque revendication précédente, dans lequel le système d'ADCS est configuré pour maintenir le satellite dans la seconde position :
pendant au moins 5 minutes, facultativement au moins 10 minutes, facultativement au moins 15 minutes ; ou
jusqu'à ce que la température de consigne soit atteinte.

5. Satellite selon une quelconque revendication précédente, dans lequel le système d'ADCS est configuré pour maintenir le satellite dans la première position pour réguler la température de satellite par émission de chaleur de satellite dans l'espace via la surface radiative.

6. Satellite selon une quelconque revendication précédente, dans lequel la surface radiative présente une absorptivité solaire comprise entre 10 % et 60 %, facultativement entre 20 % et 50 %, facultativement entre 30 % et 40 %.

7. Satellite selon une quelconque revendication précédente, dans lequel la surface radiative présente une émissivité infrarouge « IR » d'au moins 0,85, facultativement d'au moins 0,9 et une absorptivité solaire d'au moins 0,3, facultativement d'au moins 0,35.

8. Satellite selon une quelconque revendication précédente, dans lequel la surface radiative couvre une surface d'au moins 0,05 m², facultativement d'au moins 0,1 m², facultativement d'au moins 0,15 m².

9. Satellite selon une quelconque revendication précédente, dans lequel la surface radiative comprend une partie d'un panneau de radiateur faisant partie d'une structure existante du corps de satellite, facultativement dans lequel la surface radiative comprend un ruban adhésif comprenant un film de fluorure de polyvinyle.

10. Satellite selon une quelconque revendication précédente, dans lequel le satellite comprend en outre un ou plusieurs panneaux solaires (150) fixés au corps de satellite, dans lequel une surface normale à une surface solaire du ou des panneaux solaires s'étend à partir du corps de satellite dans une direction sensiblement opposée à la première direction (Y), facultativement dans lequel le système d'ADCS est configuré pour commander l'orientation du satellite afin d'alterner entre la première et la seconde position pour assurer de manière sélective le chauffage et le refroidissement du satellite.

11. Satellite selon une quelconque revendication précédente, dans lequel le satellite est un microsatellite ou un petit satellite, facultativement dans lequel le satellite est un satellite d'imagerie pour l'observation de la Terre.

12. Procédé de commande de transfert de chaleur par rayonnement thermique d'un satellite radar à synthèse d'ouverture « SAR », facultativement le satellite selon une quelconque revendication précédente, dans lequel le satellite comprend un corps incluant au moins une surface radiative configurée pour émettre de la chaleur vers l'espace, une antenne de SAR fixée au corps de satellite et un système de détermination et de commande d'attitude « ADCS » pour commander une orientation du satellite se déplaçant en orbite autour de la Terre, dans lequel le procédé réalisé par le système d'ADCS comprend :
la modification de l'orientation du satellite par rapport au soleil entre une première position dans laquelle la surface radiative est orientée à l'opposé du soleil, et une seconde position dans laquelle la surface radiative est exposée au soleil, dans lequel l'antenne de SAR est orientée vers la Terre dans la première et la seconde position ;
dans lequel le changement d'orientation du satellite inclut la rotation du satellite autour d'un axe de rotation (Z), dans lequel un vecteur normal à la surface radiative s'étend à partir du corps de satellite dans une première direction (Y) sensiblement perpendiculaire à l'axe de rotation (Z) ; et
dans lequel le procédé est réalisé entre des tâches d'imagerie.

13. Procédé selon la revendication 12, **caractérisé en ce que** le procédé remplace une ligne redondante d'un système de régulation thermique de telle sorte que le satellite soit conçu avec un seul système de chauffage électrique redondant au lieu de deux, facultativement dans lequel le procédé est réalisé entre des missions d'imagerie, facultativement dans lequel le procédé est réalisé à une position prédéterminée sur l'orbite, à un instant prédéterminé et/ou en réponse à une température mesurée.
